# EUROPEAN PATENT SPECIFICATION

(11) **EP 3 511 624 B1**
(45) Date of publication and mention of the grant of the patent: **07.09.2022**
(21) Application number: 19151712.7
(22) Date of filing: 14.01.2019
(51) Int. Cl.: F23R 3/00, F01D 25/12, F23R 3/06

(54) **COMBUSTOR FOR A GAS TURBINE ENGINE MITIGATING PARTICULATE ACCUMULATION**
BRENNKAMMER FÜR EINE GASTURBINE WELCHE PARTIKELANSAMMLUNG VERRINGERT
CHAMBRE DE COMBUSTION POUR UNE TURBINE À GAZ PERMETTANT D'ATTÉNUER L'ACCUMULATION DE PARTICULES

(30) Priority: 12.01.2018 US 201862616874 P
(43) Date of publication of application: 17.07.2019
(73) Proprietor: Raytheon Technologies Corporation, Farmington, CT 06032 (US)
(72) Inventor: MOURA, Dennis M., South Windsor, CT Connecticut 06074 (US); CLUM, Carey, East Hartford, CT Connecticut 06118 (US)
(74) Representative: Dehns

(56) References cited:
- WO-A1-2015/117137
- US-B1- 6 282 905

## Description

### TECHNICAL FIELD OF THE INVENTION

The subject matter disclosed herein generally relates to gas turbine engines and, more particularly, to a method and apparatus for mitigating particulate accumulation on cooling surfaces of components of gas turbine engines. The invention relates to a combustor for use in a gas turbine engine.

### BACKGROUND

In one example, a combustor of a gas turbine engine may be configured and required to burn fuel in a minimum volume. Such configurations may place substantial heat load on the structure of the combustor (e.g., panels, shell, etc.). Such heat loads may dictate that special consideration is given to structures, which may be configured as heat shields or panels, and to the cooling of such structures to protect these structures. Excess temperatures at these structures may lead to oxidation, cracking, and high thermal stresses of the heat shields or panels. Particulates in the air used to cool these structures may inhibit cooling of the heat shield and reduce durability. Particulates, in particular atmospheric particulates, include solid or liquid matter suspended in the atmosphere such as dust, ice, ash, sand and dirt.

WO 2015/117137 A1 discloses a turbine engine assembly including a combustor wall including a shell and a heat shield. The combustor wall defines one of the cavities with a tapered geometry. US 6282905 B1 discloses a cooling structure of a gas turbine combustor in which cooling medium flows through grooves in between an outer plate and an inner plate. Cross-sectional shape of the groove is changed in tapered form.

### SUMMARY OF THE INVENTION

According to one embodiment, there is provided a combustor as described in claim 1.

Further embodiments may include that the first length of the combustion liner extends from a first point to a second point, the first point having a first distance between the inner surface of the combustion liner and the second surface of the heat shield panel and the second point having a second distance between the inner surface of the combustion liner and the second surface of the heat shield panel, and wherein the second distance is less than the first distance.

Further embodiments may include that the first length of the combustion liner extends from a first point to a second point, the first point having a first distance between the inner surface of the combustion liner and the second surface of the heat shield panel and the second point having a second distance between the inner surface of the combustion liner and the second surface of the heat shield panel, and wherein the second distance is greater than the first distance.

Further embodiments may include that the distance between the inner surface of the combustion liner and the second surface of the heat shield panel is adjusted linearly over the first length of the combustion liner by the variable thickness.

Further embodiments may include that the distance between the inner surface of the combustion liner and the second surface of the heat shield panel is adjusted non-linearly over the first length of the combustion liner by the variable thickness.

Further embodiments may include a variable thickness along a second length of the combustion liner, the variable thickness along the second length of the combustion liner being configured to adjust a distance between the inner surface of the combustion liner and the second surface of the heat shield panel throughout the second length of the combustion liner such that a Mach number of a cross airflow within the impingement cavity is adjusted.

Further embodiments may include that the variable thickness along the first length of the combustion liner occurs in a first lateral direction parallel to the second surface of the heat shield panel and the variable thickness along the second length of the combustion liner occurs in a second lateral direction parallel to the second surface of the heat shield panel different than the first lateral direction.

Further embodiments may include that the variable thickness along the first length of the combustion liner occurs in a first lateral direction parallel to the second surface of the heat shield panel and the variable thickness along the second length of the combustion liner occurs in a second lateral direction equivalent to the first lateral direction.

Further embodiments may include that the primary aperture is oriented perpendicular to the second surface of the heat shield panel.

Further embodiments may include that the heat shield panel further comprises a secondary aperture extending from the second surface of the heat shield panel to the first surface of the heat shield panel and fluidly connecting the impingement cavity to the combustion area.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should be considered as exemplary. With reference to the accompanying drawings, like elements are numbered alike:
FIG. 1 is a partial cross-sectional illustration of a gas turbine engine;
FIG. 2 is a cross-sectional illustration of a combustor;
FIG. 3 is an enlarged cross-sectional illustration of a heat shield panel and combustion liner of a combustor;
FIG. 4A is an illustration of a combustion liner having a variable thickness, in accordance with an embodiment of the disclosure;
FIG. 4B is an illustration of a combustion liner having a variable thickness, in accordance with an embodiment of the disclosure; and
FIG. 4C is an illustration of a combustion liner having a variable thickness, in accordance with an embodiment of the disclosure.

The detailed description explains embodiments of the present disclosure, together with advantages and features, by way of example with reference to the drawings.

### DETAILED DESCRIPTION

A detailed description of one or more embodiments of the disclosed apparatus and method are presented herein by way of exemplification and not limitation with reference to the Figures.

Combustors of gas turbine engines, as well as other components, experience elevated heat levels during operation. Impingement and convective cooling of panels of the combustor wall may be used to help cool the combustor. Convective cooling may be achieved by air that is channeled between the panels and a liner of the combustor. Impingement cooling may be a process of directing relatively cool air from a location exterior to the combustor toward a back or underside of the panels.

Thus, combustion liners and heat shield panels are utilized to face the hot products of combustion within a combustion chamber and protect the overall combustor shell. The combustion liners may be supplied with cooling air including dilution passages which deliver a high volume of cooling air into a hot flow path. The cooling air may be air from the compressor of the gas turbine engine. The cooling air may impinge upon a back side of a heat shield panel that faces a combustion liner inside the combustor. The cooling air may contain particulates, which may build up on the heat shield panels overtime, thus reducing the cooling ability of the cooling air. Embodiments disclosed herein seek to address particulate adherence to the heat shield panels in order to maintain the cooling ability of the cooling air.

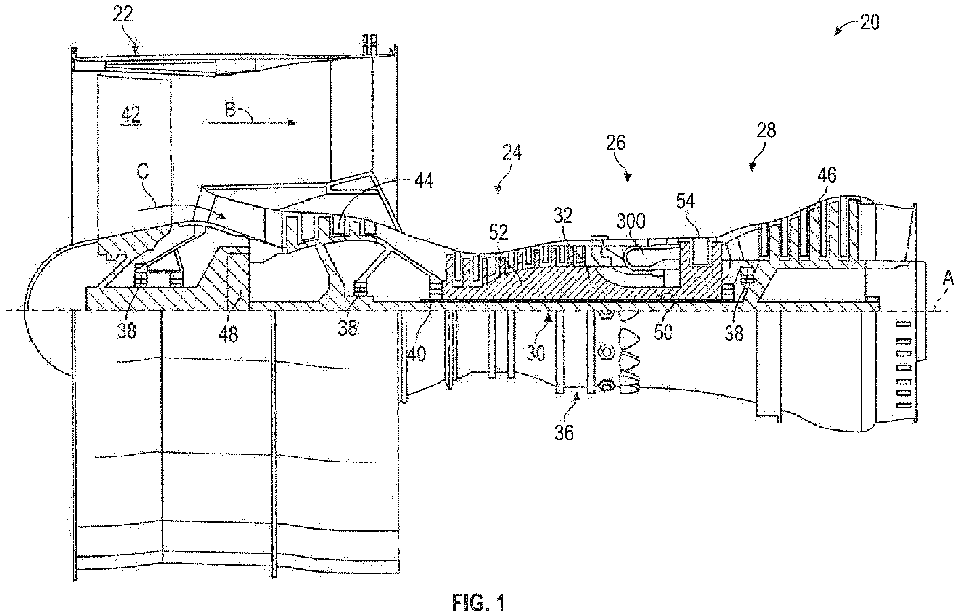

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

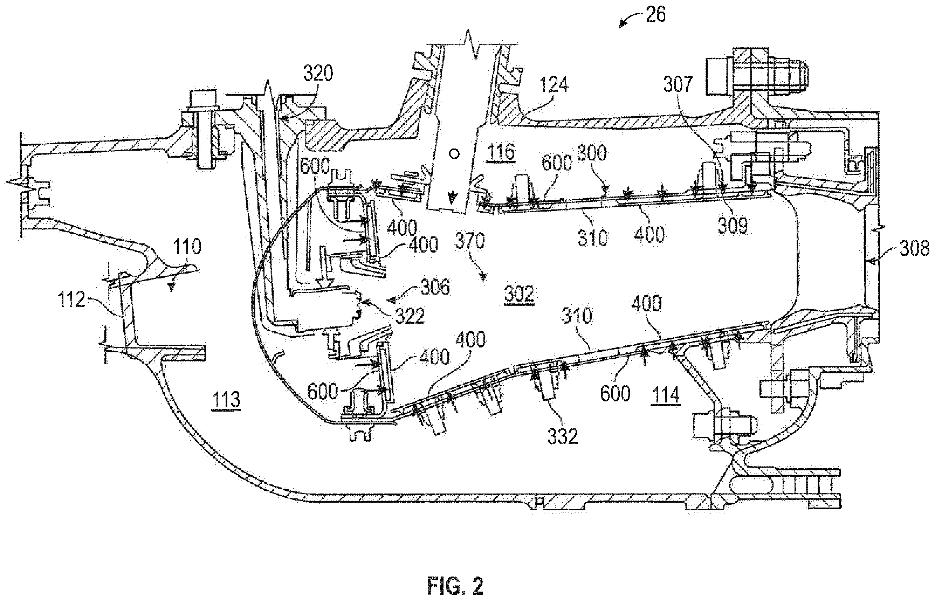

Referring now to FIG. 2 and with continued reference to FIG. 1, the combustor section 26 of the gas turbine engine 20 is shown. As illustrated, a combustor 300 defines a combustion chamber 302. The combustion chamber 302 includes a combustion area 370 within the combustion chamber 302. The combustor 300 includes an inlet 306 and an outlet 308 through which air may pass. The air may be supplied to the combustor 300 by a pre-diffuser 110. Air may also enter the combustion chamber 302 through other holes in the combustor 300 including but not limited to quench holes 310, as seen in FIG. 2.

Compressor air is supplied from the compressor section 24 into a pre-diffuser strut 112. As will be appreciated by those of skill in the art, the pre-diffuser strut 112 is configured to direct the airflow into the pre-diffuser 110, which then directs the airflow toward the combustor 300. The combustor 300 and the pre-diffuser 110 are separated by a shroud chamber 113 that contains the combustor 300 and includes an inner diameter branch 114 and an outer diameter branch 116. As air enters the shroud chamber 113, a portion of the air may flow into the combustor inlet 306, a portion may flow into the inner diameter branch 114, and a portion may flow into the outer diameter branch 116.

The air from the inner diameter branch 114 and the outer diameter branch 116 may then enter the combustion chamber 302 by means of one or more primary apertures 307 in the combustion liner 600 and one or more secondary apertures 309 in the heat shield panels 400. The primary apertures 307 and secondary apertures 309 may include nozzles, cooling holes, etc. The air may then exit the combustion chamber 302 through the combustor outlet 308. At the same time, fuel may be supplied into the combustion chamber 302 from a fuel injector 320 and a pilot nozzle 322, which may be ignited within the combustion chamber 302. The combustor 300 of the engine combustion section 26 may be housed within a shroud case 124 which may define the shroud chamber 113.

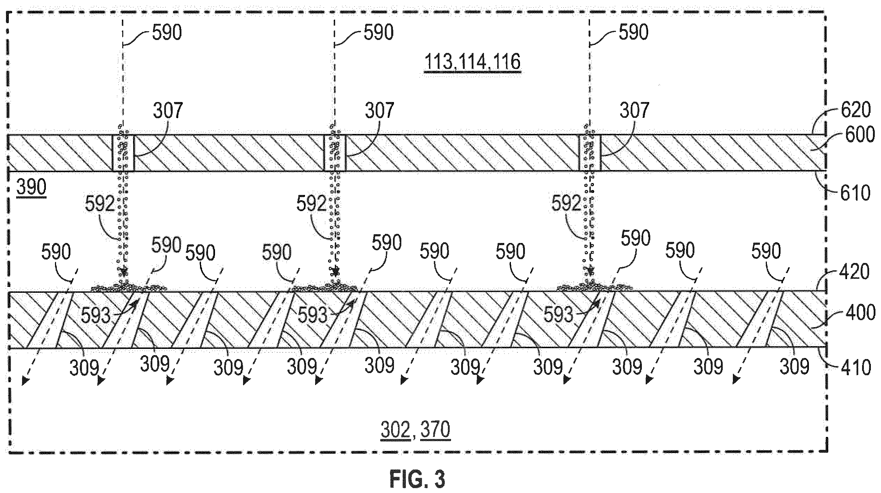

The combustor 300, as shown in FIG. 2, includes multiple heat shield panels 400 that are attached to the combustion liner 600 (See FIG. 3). The heat shield panels 400 may be arranged parallel to the combustion liner 600. The combustion liner 600 can define circular or annular structures with the heat shield panels 400 being mounted on a radially inward liner and a radially outward liner, as will be appreciated by those of skill in the art. The heat shield panels 400 are removably mounted to the combustion liner 600 by one or more attachment mechanisms 332. In some embodiments, the attachment mechanism 332 may be integrally formed with a respective heat shield panel 400, although other configurations are possible. In some embodiments, the attachment mechanism 332 may be a bolt or other structure that may extend from the respective heat shield panel 400 through the interior surface to a receiving portion or aperture of the combustion liner 600 such that the heat shield panel 400 may be attached to the combustion liner 600 and held in place. The heat shield panels 400 partially enclose a combustion area 370 within the combustion chamber 302 of the combustor 300.

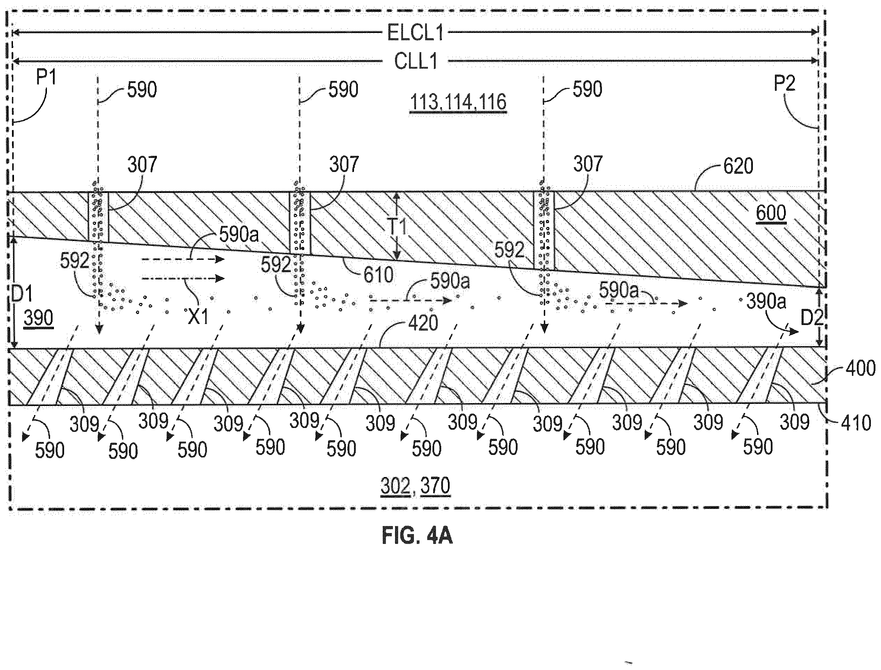

Referring now to FIGs. 3 and 4A-C with continued reference to FIGs. 1 and 2. FIG. 3 illustrates a heat shield panel 400 and combustion liner 600 of a combustor 300 (see FIG. 2) of a gas turbine engine 20 (see FIG. 1). The heat shield panel 400 and the combustion liner 600 are in a facing spaced relationship. The heat shield panel 400 includes a first surface 410 oriented towards the combustion area 370 of the combustion chamber 302 and a second surface 420 first surface opposite the first surface 410 oriented towards the combustion liner 600. The combustion liner 600 having an inner surface 610 and an outer surface 620 opposite the inner surface 610. The inner surface 610 is oriented toward the heat shield panel 400. The outer surface 620 is oriented outward from the combustor 300 proximate the inner diameter branch 114 and the outer diameter branch 116.

The combustion liner 600 includes a plurality of primary apertures 307 configured to allow airflow 590 from the inner diameter branch 114 and the outer diameter branch 116 to enter an impingement cavity 390 in between the combustion liner 600 and the heat shield panel 400. Each of the primary apertures 307 extend from the outer surface 620 to the inner surface 610 through the combustion liner 600.

Each of the primary apertures 307 fluidly connects the impingement cavity 390 to at least one of the inner diameter branch 114 and the outer diameter branch 116. The heat shield panel 400 may include one or more secondary apertures 309 configured to allow airflow 590 from the impingement cavity 390 to the combustion area 370 of the combustion chamber 302.

Each of the secondary apertures 309 extend from the second surface 420 to the first surface 410 through the heat shield panel 400. Airflow 590 flowing into the impingement cavity 390 impinges on the second surface 420 of the heat shield panel 400 and absorbs heat from the heat shield panel 400 as it impinges on the second surface 420. As seen in FIG. 3, particulate 592 may accompany the airflow 590 flowing into the impingement cavity 390. Particulate 592 may include but is not limited to dirt, smoke, soot, volcanic ash, or similar airborne particulate known to one of skill in the art. As the airflow 590 and particulate 592 impinge upon the second surface 420 of the heat shield panel 400, the particulate 592 may begin to collect on the second surface 420, as seen in FIG. 3. Particulate 592 collecting upon the second surface 420 of the heat shield panel 400 reduces the cooling efficiency of airflow 590 impinging upon the second surface 420 and thus may increase local temperatures of the heat shield panel 400 and the combustion liner 600. Particulate 592 collection upon the second surface 420 of the heat shield panel 400 may potentially create a blockage 593 to the secondary apertures 309 in the heat shield panels 400, thus reducing airflow 590 into the combustion area 370 of the combustion chamber 302. The blockage 593 may be a partial blockage or a full blockage.

As illustrated in FIGs. 4A-C, the combustion liner 600 may have a variable thickness T1 along a length of the combustion liner 600. The thickness T1 of the combustion liner 600 is a measured from the outer surface 620 of the combustion liner 600 to the inner surface 610 of the combustion liner 600. The variable thickness T1 thickness is configured to adjust the distance D1, D2 between the inner surface 610 of the combustion liner 600 and the second surface 420 of the heat shield panel 400 such that a Mach number of a cross airflow 590a within the impingement cavity 390 is adjusted. For example, the thickness T1 of the combustion liner 600 may be increased, which decreases the distance D1, D2 between the inner surface 610 of the combustion liner 600 and the second surface 420 of the heat shield panel 400 such that a Mach number of a cross airflow 590a within the impingement cavity 390 is increased. In an embodiment, the Mach number of the cross airflow 590a within the impingement cavity 390 is increased to greater than or equal to Mach 0.04. In another example, the thickness T1 of the combustion liner 600 may be decreased, which increases the distance D1, D2 between the inner surface 610 of the combustion liner 600 and the second surface 420 of the heat shield panel 400 such that a Mach number of a cross airflow 590a within the impingement cavity 390 is decreased.

The lateral direction X1 may be parallel relative to the second surface 420 of the heat shield panel 400. Advantageously, adjusting the thickness T1 of the combustion liner 600 helps to generate and/or adjust a lateral airflow 590a, which promotes the movement of particulate 592 through the impingement cavity 390, thus reducing the amount of particulate 592 collecting on the second surface 420 of the heat shield panel 400, as seen in FIG. 4A. Also advantageously, the impingement cavity 390 includes an exit 390a, and adjusting the thickness T1 of the combustion liner 600 helps to generate and/or adjust a lateral airflow 590a, which promotes the movement of particulate 592 through the impingement cavity 390 and towards the exit 390a of the impingement cavity 390. As shown in FIGs. 4A-C, the primary apertures 307 may be oriented perpendicular to the second surface 420 of the heat shield panel 400.

As illustrated in FIG. 4A, the thickness T1 of the combustion liner 600 may be adjusted along a first length CLL1 of the combustion liner from a first point P1 to a second point P2. At the first point PI, a first distance D1 between the inner surface 610 of the combustion liner 600 and the second surface 420 of the heat shield panel 400 differs from the second distance D2 between the inner surface 610 of the combustion liner 600 and the second surface 420 of the heat shield panel 400 at the second point P2. In an embodiment the second distance D2 may be less than the first distance D1. In another embodiment the second distance D2 may be greater than the first distance D1.

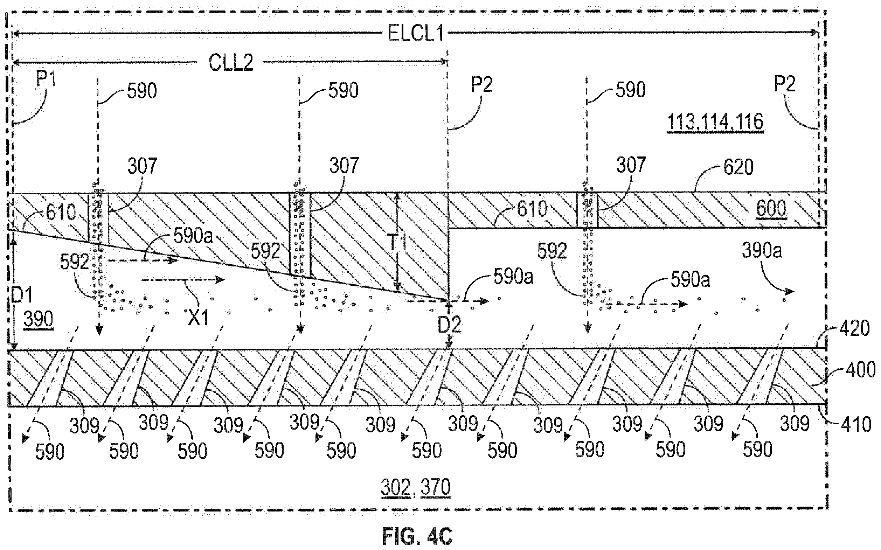

In an embodiment, the first length CLL1 may be equivalent to the entire length ELCL1 of the combustion liner 600, as shown in FIGs. 4A-B. Alternatively, the thickness T1 may be adjusted along a second length CLL2 that is only a portion of the entire length ELCL1 of the combustion liner 600, as shown in FIGs. 4C. It is understood that although the thickness T1 is only being adjusted along a single length segment (i.e. the first length CLL1 in FIGs. 4A-B and the second length CLL2 in FIG. 4C) as illustrated in FIGs. 4A-C, the thickness T1 may be adjusted differently along multiple length segments in multiple different lateral directions. For example, the combustion liner 600 may include a variable thickness T1 along a second length CLL2 of the combustion liner 600 and the variable thickness along the second length CLL2 of the combustion liner 600 is configured to adjust a distance D1, D2 between the inner surface 610 of the combustion liner 600 and the second surface 420 of the heat shield panel 400 throughout the second length CLL2 of the combustion liner 600 such that a Mach number of a cross airflow 590a within the impingement cavity 390 is adjusted. The variable thickness T1 along the first length CLL1 of the combustion liner 600 occurs in a first lateral direction X1 and the variable thickness along the second length CLL2 of the combustion liner occurs in a second lateral direction (e.g. perpendicular or opposite to lateral direction X1 in a non-limiting example) different than the first lateral direction X1. Alternatively, the variable thickness T1 along the first length CLL1 of the combustion liner 600 occurs in a first lateral direction X1 and the variable thickness T1 along the second length CLL2 of the combustion liner occurs in a second lateral direction (e.g. parallel to lateral direction X1 in a non-limiting example) equivalent to the first lateral direction X1.

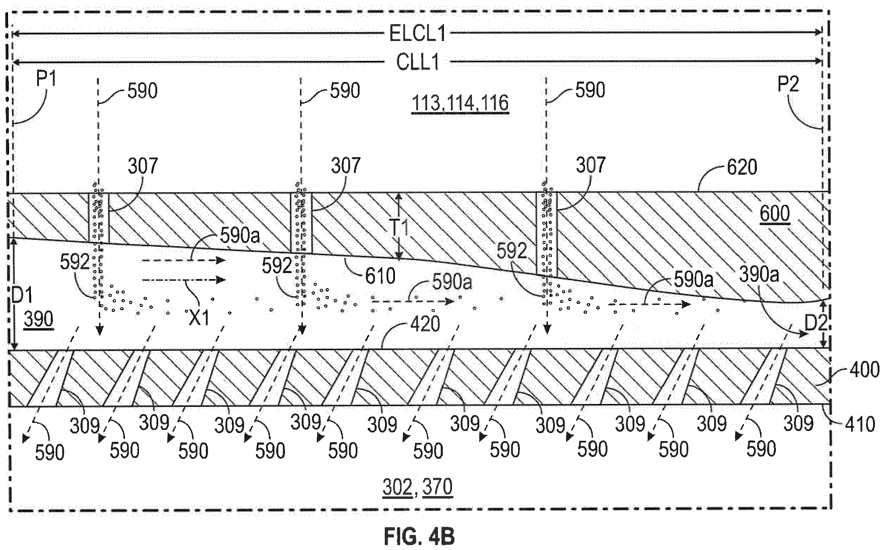

Further, as illustrated in FIGs. 4A and 4C, the thickness T1 of the combustion liner 600 may be adjusted uniformly or linearly between the first point P1 and the second point P2. Alternatively, as illustrated in FIG. 4B, the thickness T1 of the combustion liner 600 may be adjusted non-linearly or monotonically between the first point P1 and the second point P2. Advantageously, the thickness T1 may increase or decrease as local conditions require, which allows the flow to increase or decrease locally. Technical effects of embodiments of the present disclosure include varying the thickness of a combustion liner in a combustor in order to adjust the distance between the combustion liner and the heat shield panel to increase or decrease local lateral air flow in the impingement cavity located between the combustion liner and the heat shield panel.

The term "about" is intended to include the degree of error associated with measurement of the particular quantity based upon the equipment available at the time of filing the application. For example, "about" can include a non-limiting range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention.

In addition, many modifications may be made to adapt a particular situation or material to the teachings of the present invention without departing from the essential scope thereof.

Therefore, it is intended that the present invention not be limited to the particular embodiment disclosed as the best mode contemplated for carrying out this present invention, but that the present invention will include all embodiments falling within the scope of the claims.

## Claims

1. A combustor (300) for use in a gas turbine engine (20), the combustor enclosing a combustion chamber (302) having a combustion area (370), the combustor comprising:
a heat shield panel (400) having a first surface (410) and a second surface (420) opposite the first surface, the first surface being oriented towards the combustion area;
a combustion liner (600) having an inner surface (610) oriented towards the second surface of the heat shield panel, an outer surface (620) opposite the inner surface of the combustion liner, and a primary aperture (307) extending from the outer surface of the combustion liner to the inner surface of the combustion liner through the combustion liner,
wherein the heat shield panel and the combustion liner are in a facing spaced relationship wherein the second surface of the heat shield panel and the inner surface of the combustion liner define an impingement cavity (390) therebetween in fluid communication with the primary aperture for cooling the second surface of the heat shield panel,
wherein the heat shield panel is removably mounted to the combustion liner by one or more attachment mechanisms (332);
wherein the combustion liner has a variable thickness (T1) along a first length (CLL1) of the combustion liner,
**characterised in that** the impingement cavity includes an exit (390a) defined between the second surface of the heat shield panel and the inner surface of the combustion liner, and
the variable thickness being configured to adjust a distance (D1, D2) between the inner surface of the combustion liner and the second surface of the heat shield panel throughout the first length of the combustion liner such that a Mach number of a cross airflow (590a) within the impingement cavity is adjusted to promote movement of particulate through the impingement cavity and towards the exit (390a) of the impingement cavity.

2. The combustor of claim 1, wherein the first length (CLL1) of the combustion liner (600) extends from a first point (P1) to a second point (P2), the first point having a first distance (D1) between the inner surface (610) of the combustion liner (600) and the second surface (410) of the heat shield panel (400) and the second point having a second distance (D2) between the inner surface of the combustion liner and the second surface of the heat shield panel, and wherein the second distance is less than the first distance.

3. The combustor of claim 1, wherein the first length (CLL1) of the combustion liner (600) extends from a first point (P1) to a second point (P2), the first point having a first distance (D1) between the inner surface (610) of the combustion liner (600) and the second surface (420) of the heat shield panel (400) and the second point having a second distance (D2) between the inner surface of the combustion liner and the second surface of the heat shield panel, and wherein the second distance is greater than the first distance.

4. The combustor of any of claims 1 to 3, wherein the distance between the inner surface (610) of the combustion liner (600) and the second surface (420) of the heat shield panel (400) is adjusted linearly over the first length of the combustion liner by the variable thickness (T1).

5. The combustor of any of claims 1 to 3, wherein the distance between the inner surface (610) of the combustion liner (600) and the second surface (420) of the heat shield panel (400) is adjusted non-linearly over the first length of the combustion liner by the variable thickness (T1).

6. The combustor of any preceding claim, further comprising a variable thickness (T1) along a second length (CLL2) of the combustion liner (600), the variable thickness along the second length of the combustion liner being configured to adjust a distance (D1, D2) between the inner surface (610) of the combustion liner and the second surface (420) of the heat shield panel (400) throughout the second length of the combustion liner such that a Mach number of a cross airflow (590a) within the impingement cavity (390) is adjusted.

7. The combustor of claim 6, wherein the variable thickness along the first length (CLL1) of the combustion liner (600) occurs in a first lateral direction parallel to the second surface (420) of the heat shield panel (400) and the variable thickness along the second length (CLL2) of the combustion liner occurs in a second lateral direction parallel to the second surface of the heat shield panel different than the first lateral direction.

8. The combustor of claim 6, wherein the variable thickness along the first length (CLL1) of the combustion liner (600) occurs in a first lateral direction parallel to the second surface (420) of the heat shield panel (400) and the variable thickness along the second length (CLL2) of the combustion liner occurs in a second lateral direction equivalent to the first lateral direction.

9. The combustor of any preceding claim, wherein the primary aperture (307) is oriented perpendicular to the second surface (420) of the heat shield panel (400).

10. The combustor of any preceding claim, wherein the heat shield panel (400) further comprises a secondary aperture (309) extending from the second surface (420) of the heat shield panel to the first surface (410) of the heat shield panel and fluidly connecting the impingement cavity (390) to the combustion area (370).

## Patentansprüche

1. Brennkammer (300) zur Verwendung in einem Gasturbinentriebwerk (20), wobei die Brennkammer einen Verbrennungsraum (302), der einen Verbrennungsbereich (370) aufweist, umschließt, wobei die Brennkammer umfasst:
eine Hitzeschildplatte (400), die eine erste Oberfläche (410) und eine zweite Oberfläche (420) gegenüber der ersten Oberfläche aufweist, wobei die erste Oberfläche zum Verbrennungsbereich ausgerichtet ist;
einen Brennkammereinsatz (600), der eine Innenfläche (610), die zur zweiten Oberfläche der Hitzeschildplatte ausgerichtet ist, eine Außenfläche (620) gegenüber der Innenfläche des Brennkammereinsatzes und eine primäre Öffnung (307) aufweist, die sich von der Außenseite des Brennkammereinsatzes zur Innenfläche des Brennkammereinsatzes durch den Brennkammereinsatzes erstreckt,
wobei die Hitzeschildplatte und der Brennkammereinsatz in einer zugewandten beabstandeten Beziehung zueinander stehen, wobei die zweite Oberfläche der Hitzeschildplatte und die Innenfläche des Brennkammereinsatzes einen Aufprallhohlraum (390) dazwischen in Fluidverbindung mit der primären Öffnung zum Kühlen der zweiten Oberfläche der Hitzeschildplatte definieren,
wobei die Hitzeschildplatte durch einen oder mehrere Befestigungsmechanismen (332) entfernbar an dem Brennkammereinsatz montiert ist;
wobei der Brennkammereinsatz eine variable Dicke (T1) entlang einer ersten Länge (CLL1) des Brennkammereinsatzes aufweist, **dadurch gekennzeichnet, dass** der Aufprallhohlraum einen Auslass (390a) umfasst, der zwischen der zweiten Oberfläche der Hitzeschildplatte und der Innenfläche des Brennkammereinsatzes definiert ist, und
wobei die variable Dicke dazu konfiguriert ist, einen Abstand (D1, D2) zwischen der Innenfläche des Brennkammereinsatzes und der zweiten Oberfläche der Hitzeschildplatte über die erste Länge des Brennkammereinsatzes so anzupassen, dass eine Mach-Zahl eines Querluftstroms (590a) innerhalb des Aufprallhohlraums angepasst ist, um eine Bewegung von Partikeln durch den Aufprallhohlraum und in Richtung des Auslasses (390a) des Aufprallhohlraums zu fördern.

2. Brennkammer nach Anspruch 1, wobei sich die erste Länge (CLL1) des Brennkammereinsatzes (600) von einem ersten Punkt (P1) zu einem zweiten Punkt (P2) erstreckt, wobei der erste Punkt einen ersten Abstand (D1) zwischen der Innenfläche (610) des Brennkammereinsatzes (600) und der zweiten Oberfläche (410) der Hitzeschildplatte (400) aufweist und der zweite Punkt einen zweiten Abstand (D2) zwischen der Innenfläche des Brennkammereinsatzes und der zweiten Oberfläche der Hitzeschildplatte aufweist, und wobei der zweite Abstand kleiner als der erste Abstand ist.

3. Brennkammer nach Anspruch 1, wobei sich die erste Länge (CLL1) des Brennkammereinsatzes (600) von einem ersten Punkt (P1) zu einem zweiten Punkt (P2) erstreckt, wobei der erste Punkt einen ersten Abstand (D1) zwischen der Innenfläche (610) des Brennkammereinsatzes (600) und der zweiten Oberfläche (420) der Hitzeschildplatte (400) aufweist und der zweite Punkt einen zweiten Abstand (D2) zwischen der Innenfläche des Brennkammereinsatzes und der zweiten Oberfläche der Hitzeschildplatte aufweist, und wobei der zweite Abstand größer als der erste Abstand ist.

4. Brennkammer nach einem der Ansprüche 1 bis 3, wobei der Abstand zwischen der Innenfläche (610) des Brennkammereinsatzes (600) und der zweiten Oberfläche (420) der Hitzeschildplatte (400) linear über die erste Länge des Brennkammereinsatzes durch die variable Dicke (T1) angepasst wird.

5. Brennkammer nach einem der Ansprüche 1 bis 3, wobei der Abstand zwischen der Innenfläche (610) des Brennkammereinsatzes (600) und der zweiten Oberfläche (420) der Hitzeschildplatte (400) nichtlinear über die erste Länge des Brennkammereinsatzes durch die variable Dicke (T1) angepasst wird.

6. Brennkammer nach einem vorhergehenden Anspruch, ferner umfassend eine variable Dicke (T1) entlang einer zweiten Länge (CLL2) des Brennkammereinsatzes (600), wobei die variable Dicke entlang der zweiten Länge des Brennkammereinsatzes dazu konfiguriert ist, einen Abstand (D1, D2) zwischen der Innenfläche (610) des Brennkammereinsatzes und der zweiten Oberfläche (420) der Hitzeschildplatte (400) über die zweite Länge des Brennkammereinsatzes anzupassen, sodass eine Mach-Zahl eines Querluftstroms (590a) innerhalb des Aufprallhohlraums (390) angepasst wird.

7. Brennkammer nach Anspruch 6, wobei die variable Dicke entlang der ersten Länge (CLL1) des Brennkammereinsatzes (600) in einer ersten seitlichen Richtung parallel zu der zweiten Oberfläche (420) der Hitzeschildplatte (400) auftritt und die variable Dicke entlang der zweiten Länge (CLL2) des Brennkammereinsatzes in einer zweiten seitlichen Richtung parallel zu der zweiten Oberfläche der Hitzeschildplatte auftritt, die sich von der ersten seitlichen Richtung unterscheidet.

8. Brennkammer nach Anspruch 6, wobei die variable Dicke entlang der ersten Länge (CLL1) des Brennkammereinsatzes (600) in einer ersten seitlichen Richtung parallel zu der zweiten Oberfläche (420) der Hitzeschildplatte (400) auftritt und die variable Dicke entlang der zweiten Länge (CLL2) des Brennkammereinsatzes in einer zweiten seitlichen Richtung auftritt, die mit der ersten seitlichen Richtung identisch ist.

9. Brennkammer nach einem vorhergehenden Anspruch, wobei die primäre Öffnung (307) senkrecht zu der zweiten Oberfläche (420) der Hitzeschildplatte (400) ausgerichtet ist.

10. Brennkammer nach einem vorhergehenden Anspruch, wobei die Hitzeschildplatte (400) ferner eine sekundäre Öffnung (309) umfasst, die sich von der zweiten Oberfläche (420) der Hitzeschildplatte zu der ersten Oberfläche (410) der Hitzeschildplatte erstreckt und eine Fluidverbindung zwischen dem Aufprallhohlraum (390) und dem Verbrennungsbereich (370) herstellt.

## Revendications

1. Chambre de combustion (300) destinée à être utilisée dans un moteur à turbine à gaz (20), la chambre de combustion renfermant un espace de combustion (302) ayant une zone de combustion (370), la chambre de combustion comprenant :
un panneau d'écran thermique (400) ayant une première surface (410) et une seconde surface (420) opposée à la première surface, la première surface étant orientée vers la zone de combustion ;
une chemise de combustion (600) ayant une surface interne (610) orientée vers la seconde surface du panneau d'écran thermique, une surface externe (620) opposée à la surface interne de la chemise de combustion, et une ouverture principale (307) s'étendant depuis la surface externe de la chemise de combustion à la surface interne de la chemise de combustion à travers la chemise de combustion,
dans laquelle le panneau d'écran thermique et la chemise de combustion sont dans une relation espacée en face à face dans laquelle la seconde surface du panneau d'écran thermique et la surface interne de la chemise de combustion définissent une cavité d'impact (390) entre elles en communication fluidique avec l'ouverture principale pour refroidir la seconde surface du panneau d'écran thermique,
dans laquelle le panneau d'écran thermique est monté de manière amovible sur la chemise de combustion par un ou plusieurs mécanismes de fixation (332) ;
dans laquelle la chemise de combustion a une épaisseur variable (T1) le long d'une première longueur (CLL1) de la chemise de combustion,
**caractérisée en ce que** la cavité d'impact comporte une sortie (390a) définie entre la seconde surface du panneau d'écran thermique et la surface interne de la chemise de combustion, et
l'épaisseur variable étant configurée pour régler une distance (D1, D2) entre la surface interne de la chemise de combustion et la seconde surface du panneau d'écran thermique sur toute la première longueur de la chemise de combustion de sorte qu'un nombre de Mach d'un écoulement d'air transversal (590a) à l'intérieur de la cavité d'impact est réglé pour favoriser le mouvement des particules à travers la cavité d'impact et vers la sortie (390a) de la cavité d'impact.

2. Chambre de combustion selon la revendication 1, dans laquelle la première longueur (CLL1) de la chemise de combustion (600) s'étend d'un premier point (P1) à un second point (P2), le premier point ayant une première distance (D1) entre la surface interne (610) de la chemise de combustion (600) et la seconde surface (410) du panneau d'écran thermique (400) et le second point ayant une seconde distance (D2) entre la surface interne de la chemise de combustion et la seconde surface du panneau d'écran thermique, et dans laquelle la seconde distance est inférieure à la première distance.

3. Chambre de combustion selon la revendication 1, dans laquelle la première longueur (CLL1) de la chemise de combustion (600) s'étend d'un premier point (P1) à un second point (P2), le premier point ayant une première distance (D1) entre la surface interne (610) de la chemise de combustion (600) et la seconde surface (420) du panneau d'écran thermique (400) et le second point ayant une seconde distance (D2) entre la surface interne de la chemise de combustion et la seconde surface du panneau d'écran thermique, et dans laquelle la seconde distance est supérieure à la première distance.

4. Chambre de combustion selon l'une quelconque des revendications 1 à 3, dans laquelle la distance entre la surface interne (610) de la chemise de combustion (600) et la seconde surface (420) du panneau d'écran thermique (400) est réglée de manière linéaire sur la première longueur de la chemise de combustion par l'épaisseur variable (T1).

5. Chambre de combustion selon l'une quelconque des revendications 1 à 3, dans laquelle la distance entre la surface interne (610) de la chemise de combustion (600) et la seconde surface (420) du panneau d'écran thermique (400) est réglée de manière non linéaire sur la première longueur de la chemise de combustion par l'épaisseur variable (T1).

6. Chambre de combustion selon une quelconque revendication précédente, comprenant en outre une épaisseur variable (T1) le long d'une seconde longueur (CLL2) de la chemise de combustion (600), l'épaisseur variable le long de la seconde longueur de la chemise de combustion étant configurée pour régler une distance (D1, D2) entre la surface interne (610) de la chemise de combustion et la seconde surface (420) du panneau d'écran thermique (400) sur toute la seconde longueur de la chemise de combustion de sorte qu'un nombre de Mach d'un écoulement d'air transversal (590a) à l'intérieur de la cavité d'impact (390) est réglé.

7. Chambre de combustion selon la revendication 6, dans laquelle l'épaisseur variable le long de la première longueur (CLL1) de la chemise de combustion (600) se produit dans une première direction latérale parallèle à la seconde surface (420) du panneau d'écran thermique (400) et l'épaisseur variable le long de la seconde longueur (CLL2) de la chemise de combustion se produit dans une seconde direction latérale parallèle à la seconde surface du panneau d'écran thermique différente de la première direction latérale.

8. Chambre de combustion selon la revendication 6, dans laquelle l'épaisseur variable le long de la première longueur (CLL1) de la chemise de combustion (600) se produit dans une première direction latérale parallèle à la seconde surface (420) du panneau d'écran thermique (400) et l'épaisseur variable le long de la seconde longueur (CLL2) de la chemise de combustion se produit dans une seconde direction latérale équivalente à la première direction latérale.

9. Chambre de combustion selon une quelconque revendication précédente, dans laquelle l'ouverture principale (307) est orientée perpendiculairement à la seconde surface (420) du panneau d'écran thermique (400).

10. Chambre de combustion selon une quelconque revendication précédente, dans laquelle le panneau d'écran thermique (400) comprend en outre une ouverture secondaire (309) s'étendant de la seconde surface (420) du panneau d'écran thermique à la première surface (410) du panneau d'écran thermique et connectant fluidiquement la cavité d'impact (390) à la zone de combustion (370).
